# EUROPEAN PATENT SPECIFICATION

(11) **EP 1 758 490 B1**
(45) Date of publication and mention of the grant of the patent: **03.10.2007**
(21) Application number: 05747835.6
(22) Date of filing: 16.06.2005
(51) Int. Cl.: A47J 31/18, A47J 27/58

(54) **A COFFEE MACHINE**
KAFFEEMASCHINE
MACHINE A CAFE

(30) Priority: 25.06.2004 TR 200401539
(43) Date of publication of application: 07.03.2007
(73) Proprietor: Arçelik Anonim Sirketi, 34950 Istanbul (TR)
(72) Inventor: HASANREISOGLU, Levent, Arcelik Anonim Sirketi, 34950 Istanbul (TR); KAYALAR, Gokce, Arcelik Anonim Sirketi, 34950 Istanbul (TR); CAGLIN, Umit, Arcelik Anonim Sirketi, 34950 Istanbul (TR); SIMSIR, Bogac, Arcelik Anonim Sirketi, 34950 Istanbul (TR); CINAR, Levent, Arcelik Anonim Sirketi, 34950 Istanbul (TR); UTAS, Ilker, Arcelik Anonim Sirketi, 34950 Istanbul (TR); BAYKALER, Halit, Arcelik Anonim Sirketi, 34950 Istanbul (TR)
(86) International application number: PCT/IB2005/051987
(87) International publication number: WO 2006/000962

(56) References cited:
- GB-A- 511 611
- GB-A- 2 208 786

## Description

This invention relates to a coffee machine, preferably suitable for preparing Turkish coffee.

In automatic machines used to prepare such hot beverages as tea or coffee, as a result of a temperature and pressure increase in the containers utilized for cooking, brewing or warm keeping purposes, overflow incidents may occur and, overflow fluids may damage metal parts or electrical connections of the machine. In addition to that, overflow liquids may cause problems concerning cleanliness of the places where the machine is used. In automatic machines used for preparing hot beverages, several methods are employed in order to prevent overflows or to collect overflow liquids. Particularly, Turkish coffee prepared in automatic machines, may easily overflow from the pot where it is cooked due to its fast foaming property during cooking and thereby may damage the coffee machine.

In the United States Patent Document US 4739898, a description is given of a closure with anti-evaporation and spill-resistant features which is utilized in a container for such hot beverages as coffee or tea or for near-boiling water. The overflow preventing closure incorporates a light-weight spherical piece which is positioned to the upper portion of the filling passageway and is used to block the outflow of vapor and, a heavier second spherical piece which is used to prevent overflowing.

In the United States Patent Document US 6123010, a description is given of an overflow container where overflow liquids are collected and which is positioned below the container where coffee is heated.

The aim of the present invention is the realization of a coffee machine wherein means are provided to prevent the beverages cooked inside from overflowing.

The coffee machine realized in order to attain above mentioned aim of the present invention is illustrated in the attached figures where:

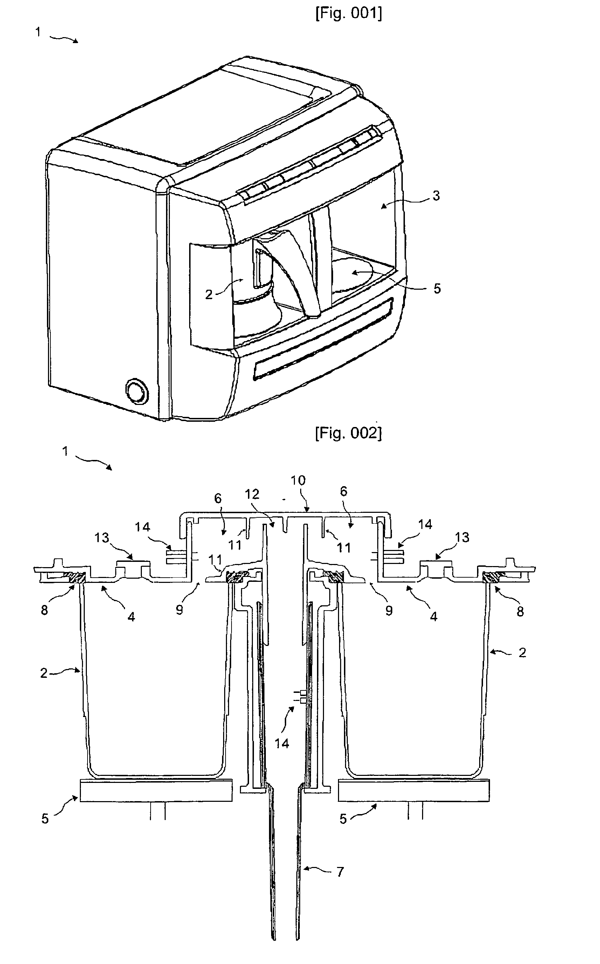

Fig.1 - is a perspective view of a coffee machine.

Fig.2 - is a schematic representation of a discharge conduit, cooking chambers and overflow chambers.

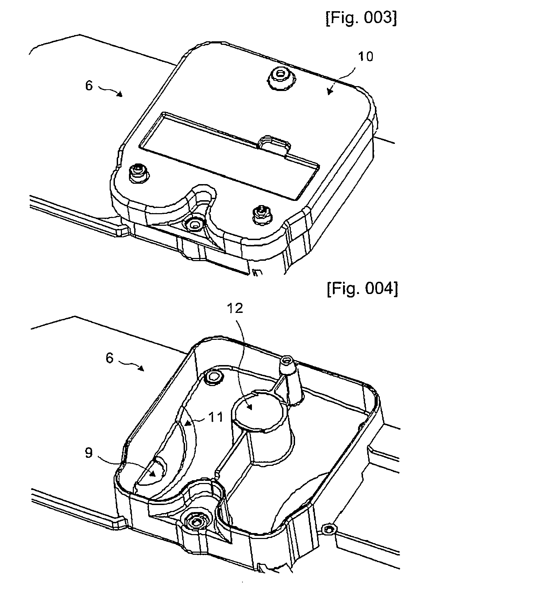

Fig.3 - is a perspective view of an overflow chamber, as its lid is in closed position.

Fig.4 - is a perspective view of an overflow chamber, as its lid is in open position.

The elements shown in figures are numbered individually as follows:
1. Coffee machine
2. Cooking chamber
3. Cooking room
4. Ceiling
5. Heater
6. Overflow chamber
7. Discharge conduit
8. Gasket
9. Overflow chamber inlet
10. Lid
11. Barrier
12. Overflow chamber outlet
13. Steam thermostat
14. Overflow sensor

The coffee machine (1) comprises a cooking chamber (2) where cooking process is performed, a cooking room (3) where the cooking chamber (2) is placed into, a ceiling (4) positioned at the upper part of the cooking room (3) so as to provide a sealed contact with the upper edge of the cooking chamber (2) during cooking process, a heater (5) whereby the cooking chamber (2) is heated for a defined cooking period, an overflow chamber (6) which enables the outflow of steam from the cooking chamber (2) as a result of temperature and pressure increase during cooking process and whereby overflow liquids from the cooking chamber (2) are collected and said overflow liquids are transferred back to the cooking chamber (2) as causes of overflow are eliminated, a discharge conduit (7) with one of its ends communicating with the overflow chamber (6) and the other end opening to the outside of the coffee machine (1), whereby the outflow of the steam from the overflow chamber (6) is permitted and excess amount of liquids accumulated in the overflow chamber (6) are discharged out, a gasket (8) whereby cooking process is accelerated by ensuring the sealing between the cooking chamber (2) and the ceiling (4) of the cooking room (3) and which is used to prevent overflowing from the spout of the cooking chamber (2) and, an overflow chamber inlet (9) located inside the area surrounded by the upper edge of the cooking chamber (2) that contacts the ceiling (4) as sealed, opening from the ceiling (4) to the overflow chamber (6), and where overflow liquids from the cooking chamber (2) and returning liquids to the cooking chamber (2) and steam pass through.

The overflow chamber (6) incorporates a lid (10) closing its upper part and whereby overflow liquids are prevented from spilling inside the coffee machine (1), one or more than one barrier (11) which prevents such liquids that tend to overflow by quickly foaming as the boiling point is approached as Turkish coffee or milk from being directed to the discharge conduit (7) at first and from flowing out of the coffee machine (1) and, an overflow chamber outlet (12) whereby liquids that are able to surpass the barriers (11) by overflowing faster than normal and in excessive amounts are routed to the discharge conduit (7) and the pressure inside the cooking chamber (2) is stabilized as it permits the outflow of steam.

In one embodiment of the present invention, the coffee machine (1) incorporates one or more than one steam thermostat (13) positioned above the cooking chamber (2), reading the steam temperature during boiling and, whereby an overflow is detected.

In another embodiment of the present invention, the coffee machine (1) incorporates one or more than one overflow sensor (14) which consists of electrode ends detecting an overflow by sensing the resistance difference in dry medium and inside the liquid and which is positioned at the overflow chamber (6) or at the discharge conduit (7).

In the coffee machine (1) which is the object of the present invention, preferably while preparing Turkish coffee, in order to obtain the desired flavor and consistency of Turkish coffee, cooking process is finished as the foam formed on the coffee reaches a desired height before coffee inside the cooking chamber (2) reaches the boiling point and is controlled without an overflow. Precautions are taken so that overflow liquids do not damage the coffee machine (1) and the environment in case of an overflow due to a user fault or sudden foaming of cooked liquid. Liquids attempting to overflow from the cooking chamber (2) under the effect of boiling and foaming as a result of heating, are prevented by means of the gasket (8) between the cooking chamber (2) and the ceiling (4) of the cooking room (3) and, fill into the overflow chamber (6) by passing through the overflow chamber inlet (9). By means of the barriers (11), liquids and foam that overflow in normal amounts are prevented from being quickly directed to the discharge conduit (7), particularly during sudden overflows. The steam thermostat (13) or overflow sensors (14), detecting an overflow, are utilized to stop heating and, liquids accumulated inside the overflow chamber (6) are then transferred back to the cooking chamber (2). Steam generated during the cooking process, is discharged out by reaching from the cooking chamber (2) to the overflow chamber (6) and from the overflow chamber (6) to the discharge conduit (7). Thereby, it is achieved to prevent the pressure inside the cooking chamber (2) from increasing during heating. If an overflow occurs in excessive amounts, by surpassing the barriers (11) after entering the overflow chamber (6), overflow liquid reaches from the overflow chamber outlet (12) to the discharge conduit (7) and, is discharged. Thereby, it is achieved that overflow liquids can not damage the coffee machine (1) even if the amount of overflow is considerably larger than expected.

In another embodiment of the present invention, in order to prevent overflow instantaneously, at the moment of overflow water is pumped into the cooking chamber (2) for a short period of time by means of a pump triggered by the steam thermostat (13) and / or the overflow sensor (14) and thereby, by suddenly adding cold water to the boiling or foaming liquid, overflow is attenuated and liquids that reach the overflow chamber (6) are transferred back.

In the coffee machine (1) in accordance with the present invention, by applying mentioned overflow solutions, safe and clean conditions of use are provided.

## Claims

1. A coffee machine (1) comprising; a cooking chamber (2) where cooking process is performed; a heater (5) whereby the cooking chamber (2) is heated and; a cooking room (3) where the cooking chamber (2) is placed into; and **characterized by** an overflow chamber (6) which enables the outflow of steam from the cooking chamber (2) as a result of temperature and pressure increase during cooking process and whereby overflow liquids from the cooking chamber (2) are collected and said overflow liquids are transferred back to the cooking chamber (2) as reasons of overflow are eliminated.

2. A coffee machine (1) as described in Claim 1, **characterized by** a ceiling (4) positioned at the upper portion of the cooking room (3) so as to provide a sealed contact with the upper edge of the cooking chamber (2) during cooking process and, by an overflow chamber inlet (9) located inside the area surrounded by the upper edge of the cooking chamber (2) that contacts the ceiling (4) as sealed, opening from the ceiling (4) to the overflow chamber (6), and where overflow liquids from the cooking chamber (2) and returning liquids to the cooking chamber (2) and steam pass through.

3. A coffee machine (1) as described in Claim 1, **characterized by** a discharge conduit (7) with one of its ends communicating with the overflow chamber (6) and the other end opening to the outside of the coffee machine (1), whereby the outflow of the steam from the overflow chamber (6) is permitted and excess amount of liquids accumulated in the overflow chamber (6) are discharged.

4. A coffee machine (1) as described in Claims 1 and 2, **characterized by** a gasket (8) whereby cooking process is accelerated by ensuring the sealing between the cooking chamber (2) and the ceiling (4) of the cooking room (3) and which is used to prevent overflowing from the spout of the cooking chamber (2).

5. A coffee machine (1) as described in Claims 1 - 3, **characterized by** an overflow chamber (6) which comprises a lid (10) closing its upper portion and whereby overflow liquids are prevented from spilling inside the coffee machine (1), one or more than one barrier (11) which prevents liquids that tend to overflow by quickly foaming as the boiling point is approached from being directed to the discharge conduit (7) at first and from flowing out of the coffee machine (1) and, an overflow chamber outlet (12) whereby liquids that are able to surpass the barriers (11) by overflowing faster than normal and in excessive amounts are routed to the discharge conduit (7) and the pressure inside the cooking chamber (2) is stabilized as it permits the outflow of steam.

6. A coffee machine (1) as described in Claim 1, **characterized by** one or more than one steam thermostat (13) positioned above the cooking chamber (2), reading the steam temperature during boiling and, whereby an overflow is detected.

7. A coffee machine (1) as described in Claims 1 and 3, **characterized by** one or more than one overflow sensor (14) which comprises electrode ends detecting an overflow by reading the resistance difference in dry medium and inside the liquid and which is positioned at the overflow chamber (6) or at the discharge conduit (7).

8. A coffee machine (1) as described in Claim 6, **characterized by** asteam thermostat (13) which, at the moment of an overflow, functions as a trigger to pump water into the cooking chamber (2) so that overflowing is attenuated.

9. A coffee machine (1) as described in Claim 7, **characterized by** an overflow sensor (14) which, at the moment of an overflow, functions as a trigger to pump water into the cooking chamber (2) so that overflowing is attenuated.

## Patentansprüche

1. Kaffeemaschine (1), umfassend: eine Brühkammer (2), in der der Brühprozess durchgeführt wird; eine Erwärmungsvorrichtung (5), durch die die Brühkammer (2) erwärmt wird; und einen Brühraum (3), in dem die Brühkammer (2) angeordnet ist; und **gekennzeichnet durch** eine Überlaufkammer (6), die das Ausströmen von Dampf, der während des Brühprozesses aufgrund des Temperatur- und Druckanstiegs entsteht, aus der Brühkammer (2) ermöglicht, und wodurch überströmende Flüssigkeit aus der Brühkammer (2) aufgefangen und zurück an die Brühkammer (2) geführt wird, nachdem die Gründe für das Überlaufen beseitigt wurden.

2. Kaffeemaschine (1) nach Anspruch 1, **gekennzeichnet durch** eine Decke (4), die am oberen Abschnitt des Brühraums (3) angeordnet ist, um während des Brühprozesses einen dichten Kontakt mit der Oberkante der Brühkammer (2) bereitzustellen, und **durch** einen Überlaufkammereinlauf (9), der innerhalb des Bereichs angeordnet ist, der von der Oberkante der Brühkammer (2) umgeben ist, die bei Abdichtung in Kontakt mit der Decke (4) gelangt, und der sich von der Decke (4) hin zu der Überlaufkammer (6) öffnet, und **durch** den Überlaufflüssigkeit aus der Brühkammer (2) und Flüssigkeit, die zur Brühkammer (2) zurückgeführt wird, und Dampf hindurch laufen.

3. Kaffeemaschine (1) nach Anspruch 1, **gekennzeichnet durch** eine Ablassleitung (7), deren eines Ende in Verbindung mit der Überlaufkammer (6) steht, und deren anderes Ende sich zur Außenseite der Kaffeemaschine (1) hin öffnet, wodurch das Ausströmen des Dampfes aus der Überlaufkammer (6) ermöglicht wird, und überschüssige Flüssigkeit, die sich in der Überlaufkammer (6) angesammelt hat, abgelassen wird.

4. Kaffeemaschine (1) nach Anspruch 1 und 2, **gekennzeichnet durch** einen Dichtungsring (8), anhand dessen der Brühprozess beschleunigt wird, indem er die Abdichtung zwischen der Brühkammer (2) und der Decke (4) des Brühraums (3) sicherstellt, und der benutzt wird, um ein Überlaufen aus dem Auslauf der Brühkammer (2) zu vermeiden.

5. Kaffeemaschine (1) nach den Ansprüchen 1 bis 3, **gekennzeichnet durch** eine Überlaufkammer (6), die einen Deckel (10) umfasst, der ihren oberen Abschnitt schließt, wodurch verhindert wird, dass überlaufende Flüssigkeit ins Innere der Kaffeemaschine (1) dringt, eine oder mehrere Barrieren (11), die verhindern, dass Flüssigkeit, die zum Überlaufen neigt, indem sie kurz vor Erreichen des Siedepunkts Blasen wirft, zunächst zur Ablassleitung (7) geführt wird und dann aus der Kaffeemaschine (1) fließt, und einen Überlaufkammerablauf (12), **durch** den Flüssigkeit, die die Barrieren (11) überwinden konnte, indem sie schneller als gewöhnlich und in übergroßen Mengen überläuft, zur Ablassleitung (7) geführt wird, und der Druck im Inneren der Brühkammer (2) stabilisiert wird, indem das Ausströmen von Dampf ermöglicht wird.

6. Kaffeemaschine (1) nach Anspruch 1, **gekennzeichnet durch** ein oder mehrere Dampfthermostate (13), die über der Brühkammer (2) angeordnet sind, und die während des Brühens die Dampftemperatur messen, wodurch ein Überlaufen detektiert wird.

7. Kaffeemaschine (1) nach den Ansprüchen 1 und 3, **gekennzeichnet durch** einen oder mehrere Überlaufsensoren (14), die Elektrodenenden umfassen, die ein Überlaufen detektieren, indem sie die Widerstandsdifferenz im trockenen Medium und im Inneren der Flüssigkeit messen, und die an der Überlaufkammer (6) oder an der Ablassleitung (7) angeordnet sind.

8. Kaffeemaschine (1) nach Anspruch 6, **gekennzeichnet durch** ein Dampfthermostat (13), das zum Zeitpunkt des Überlaufens als ein Auslöser dient, damit Wasser in die Brühkammer (2) gepumpt wird, so dass das Überlaufen abgeschwächt wird.

9. Kaffeemaschine (1) nach Anspruch 7, **gekennzeichnet durch** einen Überlaufsensor (14), der zum Zeitpunkt des Überlaufens als ein Auslöser dient, damit Wasser in die Brühkammer (2) gepumpt wird, so dass das Überlaufen abgeschwächt wird.

## Revendications

1. Machine à café (1) comprenant une chambre de cuisson (2) où le processus de cuisson est assuré ; un système de chauffage (5) par lequel la chambre de cuisson (2) est chauffée ; et un compartiment de cuisson (3) dans lequel la chambre de cuisson (2) est placée ; **caractérisée par** une chambre de débordement (6) qui permet le débordement de la vapeur d'eau sur la chambre de cuisson (2), laquelle vapeur d'eau qui se produit en conséquence de l'augmentation de la température et de la pression durant le processus de cuisson (2), et dans laquelle la forme en liquide de la vapeur d'eau débordée sur la chambre de cuisson (2) est collectée pour ensuite être retransmise dans la chambre de cuisson, ce qui élimine le débordement en réalité.

2. Machine à café (1) selon la revendication 1, **caractérisée par** un plafond (4) positionné sur la partie supérieure du compartiment de cuisson (3) pour assurer un certain contact avec le côté supérieur de la chambre de cuisson (2) durant le processus de cuisson, et par une anse de la chambre de débordement (9) placée dans l'espace entouré par le côté supérieur de la chambre de cuisson (2) qui a un certain contact avec le plafond (4), s'ouvrant du côté du plafond (4) vers la chambre de débordement (6), et où les liquides débordent sur la chambre de cuisson (2) et retournent à nouveau à la chambre de cuisson (2) et la vapeur d'eau passe à travers.

3. Machine à café (1) selon la revendication 1, **caractérisée par** un conduit de décharge (7) dont l'une des extrémités se communique avec la chambre de débordement (6) et l'autre extrémité s'ouvre à l'extérieur de la machine à café (1), où la vapeur d'eau sortant de la chambre de débordement (6) passe et l'excès de liquide accumulé dans la chambre de débordement (6) est déchargé.

4. Machine à café (1) selon les revendications 1 et 2, **caractérisée par** un joint (8) par lequel le processus de cuisson est accéléré en assurant le contact entre la chambre de cuisson (2) et le plafond (4) du compartiment de cuisson (3) et qui est également utilisé pour empêcher le débordement par la bouche de la chambre de cuisson (2).

5. Machine à café (1) selon les revendications 1 à 2, **caractérisée par** une chambre de débordement (6) comprenant un couvercle (10) qui sert à couvrir sa partie supérieure et par lequel le liquide débordé est empêché de rentrer dans la machine à café (1), une ou plusieurs barrières (11) qui empêche le liquide ayant tendance à déborder en s'écumant rapidement quand le point d'ébullition s'approche, d'être transmis au conduit de décharge (7) premièrement, et d'être coulé à l'extérieur de la machine à café (1), et une sortie de la chambre de débordement (12) par laquelle le liquide ayant pu franchir les barrières (11) en se débordant plus vite que d'habitude et l'excès de liquide sont orientés vers le conduit de décharge (7), ainsi la pression dans la chambre de cuisson (2) est stabilisée pour permettre la sortie de la vapeur d'eau.

6. Machine à café (1) selon la revendication 1, **caractérisée par** un ou plusieurs thermostat de vapeur d'eau (13) positionné au-dessus de la chambre de cuisson (2), qui permet de lire la température durant l'ébullition et grâce auquel les débordements éventuels sont détectés.

7. Machine à café (1) selon les revendications 1 et 3, **caractérisée par** un ou plusieurs capteur de débordement (14) comprenant des bouts d'électrode détectant un débordement en lisant la différence de résistance entre la moyenne sèche et l'intérieur du liquide, et positionné dans la chambre de débordement (6) ou dans le conduit de décharge (7).

8. Machine à café (1) selon la revendication 6, **caractérisée par** un thermostat de vapeur d'eau (13) qui fonctionnerait, au moment d'un débordement éventuel, comme un mécanisme pour pomper l'eau dans la chambre de cuisson (2) dans le but d'atténuer le débordement.

9. Machine à café (1) selon la revendication 7, **caractérisée par** un capteur de débordement (14) qui fonctionnerait, au moment d'un débordement éventuel, comme un mécanisme pour pomper l'eau dans la chambre de cuisson (2) dans le but d'atténuer le débordement.
